# EUROPEAN PATENT APPLICATION

(11) **EP 4 779 141 A1**
(43) Date of publication of application: **22.07.2026**
(21) Application number: 26152184.3
(22) Date of filing: 15.01.2026
(51) Int. Cl.: F02C 9/00, F01D 21/00, F02C 9/28

(54) **FUEL COKING DETECTIONS THROUGH CROSS CHANNEL SENSING AND AI**

(30) Priority: 16.01.2025 US 202519025811
(71) Applicant: RTX Corporation, Farmington, CT 06032 (US)
(72) Inventor: THEURKAUF, Charles, 06033 Glastonbury (US); SMITH, Patrick J., 48334 Farmington Hills (US)
(74) Representative: Dehns

(57) **Abstract**

A method of operating an aircraft (100) includes determining, for an engine (110) of an aircraft (100), a high delta T5 (MDT5) between a first channel and a second channel over a flight of the aircraft (100). The method also includes updating a multilevel perception neural network (200) with the MDT5, and determining, based on the neural network (200), a fuel coking factor for the engine (110).

## Description

### TECHNICAL FIELD

This disclosure generally relates to gas turbine engines. More specifically, this disclosure relates to fuel coking detections through cross channel sensing and artificial intelligence (Al).

### BACKGROUND

During operation of a gas turbine engine, when fuel is raised to a high enough temperature, the fuel breaks down and can coat the inside of fuel injectors. This is referred to as fuel coking. Fuel coking of the fuel injectors may cause asymmetric burn in the combustion chamber, which can lead to overall engine inefficacies and excess wear on the engine. It is desirable to detect fuel coking so that relevant maintenance may be performed on the engine.

### SUMMARY

This invention relates to fuel coking detections through cross channel sensing and Al.

In an aspect of the present invention, a method of operating an aircraft may include determining, for an engine of an aircraft, a high delta T5 (MDT5) between a first channel and a second channel over a flight of the aircraft. The method may also include updating a multilevel perception neural network with the MDT5, and determining, based on the neural network, a fuel coking factor for the engine.

In another aspect of the present invention, a controller may be configured to determine, for an engine of an aircraft, an MDT5 between a first channel and a second channel over a flight of the aircraft. The controller may also be configured to update a multilevel perception neural network with the MDT5, and determine, based on the neural network, a fuel coking factor for the engine.

In another aspect of the present invention, a non-transitory machine readable medium may contain instructions that, when executed by at least one processor, cause the at least one processor to determine, for an engine of an aircraft, an MDT5 between a first channel and a second channel over a flight of the aircraft. The non-transitory machine readable medium may also contain instructions that, when executed by the at least one processor, cause the at least one processor to update a multilevel perception neural network with the MDT5, and determine, based on the neural network, a fuel coking factor for the engine.

Any single one or any combination of the following features may be used with the above examples. The method may also include determining that the fuel coking factor exceeds a threshold, and triggering a maintenance event in response to the determination. The maintenance event may be a replacement of fuel injectors of the engine. The neural network may include a plurality of MDT5s recorded over a number of flights of the aircraft. Updating the neural network with the MDT5 may include replacing an oldest recorded MDT5 of the plurality of MDT5s with the MDT5. The neural network may be trained based on the plurality of MDT5s. An increase of the plurality MDT5s over time correspond with an increase in the fuel coking factor. The first channel may correspond with a T5 measurement at a first location of the engine, and the second channel may correspond with a T5 measurement at a second location of the engine. One or more temperature probes may be located at the first location of the engine and may transmit data over the first channel. One or more temperature probes may be located at the second location of the engine and may transmit data over the second channel.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates components from an example aircraft in accordance with this disclosure;
FIGURE 2 illustrates an example neural network in accordance with this disclosure; and
FIGURE 3 illustrates an example method of operating an aircraft in accordance with this disclosure.

### DETAILED DESCRIPTION

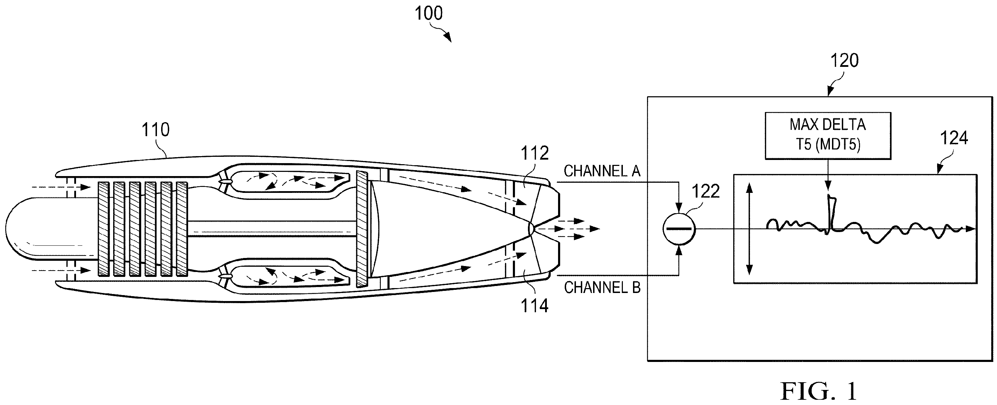

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, during operation of a gas turbine engine, when fuel is raised to a high enough temperature, the fuel breaks down and can coat the inside of fuel injectors. This is referred to as fuel coking. Fuel coking of the fuel injectors may cause asymmetric burn in the combustion chamber, which can lead to overall engine inefficacies and excess wear on the engine. It is desirable to detect fuel coking so that relevant maintenance may be performed on the engine. The present disclosure provides fuel coking detections through cross channel sensing and artificial intelligence Al.

Asymmetric burn in the combustion chamber caused by fuel coking may be detected as a temperature differential in the exhaust temperature (T5) of the engine. This differential may be referred to as delta T5. In some embodiments, delta T5 may be determined by calculating the difference between a first channel and a second channel for measuring T5. For example, the first channel may correspond with a T5 measurement at a first location of the engine, while the second channel may correspond with a T5 measurement at a second location of the engine. For instance, one or more temperature probes located at the first location may transmit data over the first channel, and one or more temperature probes located at the second location may transmit data over the second channel.

FIGURE 1 illustrates components from an example aircraft 100 in accordance with this disclosure. As can be seen in FIGURE 1, aircraft 100 includes a gas turbine engine 110 and a controller 120. Controller 120 is configured to receive temperature data from a first location 112 and a second location 114 of engine 110 during operation of engine 110 (for example, during a flight of aircraft 100). The temperature data from location 112 is received over a first channel "Channel A" and temperature data from location 114 is received over a second channel "Channel B." Controller 120 is further configured to, during flight of aircraft 100, determine the delta T5 122 over a time 124 of the flight. The delta T5 122 over the time 124 is illustrated as a line graph in the example of FIGURE 1.

The delta T5 may spike during flight phase changes. For example, during transition from takeoff to cruise, etc. The intensity of the spike may be indicative of fuel coking. Controller 120 is configured to determine the high Delta T5 (MDT5) during the flight, and record this data for later processing.

Although FIGURE 1 illustrates components from an example aircraft 100, various changes could be made to FIGURE 1. For example, aircraft 100 could include multiple gas turbine engines, and controller 120 could be configured to record an MDT5 from each of the engines.

As discussed above, the intensity of a delta T5 spike may be indicative of fuel coking. Because of this, comparing the MDT5 of the engine over a series of flights may be useful in determining whether the engine has a fuel coking issue. For example, an artificial intelligence (AI) such as a multilevel perception neural network could be trained with the MDT5 data to characterize a fuel coking factor of the engine based on the MDT5 data. An increase of the plurality MDT5s over time may correspond with an increase in the fuel coking factor.

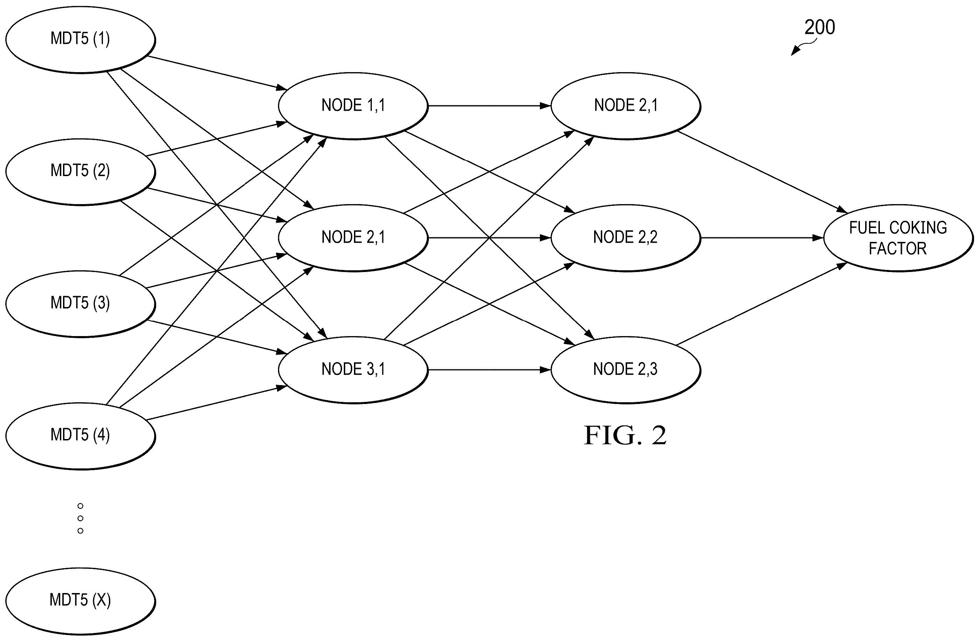

FIGURE 2 illustrates an example neural network 200 in accordance with this disclosure. In the example of FIGURE 2, neural network 200 has been trained with a number of MDT5s: MDT5(1)-MDT5(X). For example, X may equal fifty, corresponding with neural network 200 being trained with a different MDT5 recorded across fifty different flights. In the example of FIGURE 2, MDT5(1)-MDT5(X) are chronological. For example, in some embodiments, MDT5(X) may correspond with an MDT5 from a most recent flight of an aircraft, and MDT5(1) may correspond with an MDT5 of an oldest flight of the aircraft for which neural network 200 is trained. Based on the training data, neural network 200 produces a fuel coking factor for the engine. The fuel coking factor may indicate that a fuel coking issue exists for the engine, and the engine may be flagged for accelerated maintenance if the fuel coking factor is excessive.

Although FIGURE 2 illustrates an example neural network 200, various changes could be made to FIGURE 2. For example, while shown as being trained with including a number of MDT5s MDT5(1)-MDT5(X), neural network 200 may be trained with any number of MDT5s.

As described above, a fuel coking factor from a neural network may indicate that a fuel coking issue exists for an engine, and the engine may be flagged for accelerated maintenance. For example, a controller of the engine may determine that the fuel coking factor exceeds a threshold, and may flag a location in memory, display an alert on a display, transmit data to a server, etc. indicating the fuel coking factor exceeds the threshold. This may initiate a maintenance procedure. For example, this may alert a technician to replace the fuel injectors of the engine.

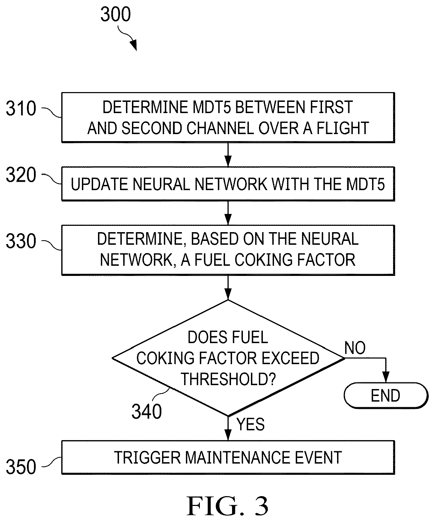

FIGURE 3 illustrates an example method 300 of operating an aircraft in accordance with this disclosure. For ease of explanation, the method 300 shown in FIGURE 3 may be described as involving the various components of FIGURES 1-2. However, the method 300 shown in FIGURE 3 may involve the use of any suitable device(s) and in any suitable system(s).

As shown in in FIGURE 3, at step 310, a controller (such as controller 120) determines, for an engine (such as engine 110) of an aircraft (such as aircraft 100), an MDT5 between a first channel (such as channel A) and a second channel (such as channel B) over a flight of the aircraft.

At step 320, the controller updates a multilevel perception neural network (such as neural network 200) with the MDT5 for the flight (for example, after landing). In some embodiments, the neural network may include a plurality of MDT5s recorded over a number of flights of the aircraft. In some embodiments, updating the neural network with the MDT5 may include replacing an oldest recorded MDT5 of the plurality of MDT5s with the MDT5 from the most recent flight (i.e., the flight from step 310). In some embodiments, the neural network is trained based on the plurality of MDT5s.

At step 330, the controller determines, based on the neural network, a fuel coking factor for the engine. For example, in some embodiments, an increase of the plurality MDT5s over time may corresponds with an increase in the fuel coking factor.

At step 340, the controller determines whether the fuel coking factor exceeds a threshold. If the fuel coking factor does not exceed the threshold, method 300 ends. Otherwise, if the fuel coking factor exceeds the threshold, the method proceeds to step 350.

At step 350, the controller triggers a maintenance event in response to the determination that the fuel coking factor exceeds the threshold. For example, the controller may alert a technician to perform the maintenance event. The maintenance event may include replacement of the fuel injectors of the engine.

Although FIGURE 3 illustrates one example of a method 300 of operating an aircraft, various changes may be made to FIGURE 3. For example, while shown as a series of steps, various steps in FIGURE 3 could overlap, occur in parallel, occur in a different order, or occur any number of times (including zero times).

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method of operating an aircraft (100), the method comprising:
determining, for an engine (110) of the aircraft (100), a high delta T5 (MDT5) between a first channel and a second channel over a flight of the aircraft (100);
updating a multilevel perception neural network (200) with the MDT5; and
determining, based on the neural network (200), a fuel coking factor for the engine (110).

2. The method of Claim 1, further comprising:
determining that the fuel coking factor exceeds a threshold; and
triggering a maintenance event in response to the determination.

3. The method of Claim 2, wherein the maintenance event is a replacement of fuel injectors of the engine (110).

4. The method of Claim 1, 2 or 3, wherein the neural network (200) includes a plurality of MDT5s recorded over a number of flights of the aircraft (100).

5. The method of Claim 4, wherein updating the neural network (200) with the MDT5 comprises replacing an oldest recorded MDT5 of the plurality of MDT5s with the MDT5.

6. The method of Claim 4 or 5, wherein the neural network (200) is trained based on the plurality of MDT5s.

7. The method of Claim 4, 5 or 6, wherein an increase of the plurality MDT5s over time corresponds with an increase in the fuel coking factor.

8. A controller (120) configured to:
determine, for an engine (110) of an aircraft (100), a high delta T5 (MDT5) between a first channel and a second channel over a flight of the aircraft (100);
update a multilevel perception neural network (200) with the MDT5; and
determine, based on the neural network (200), a fuel coking factor for the engine (110).

9. The controller (120) of Claim 8, wherein the controller (120) is further configured to:
determine that the fuel coking factor exceeds a threshold; and
trigger a maintenance event in response to the determination.

10. The controller (120) of Claim 9, wherein the maintenance event is a replacement of fuel injectors of the engine (110).

11. The controller (120) of Claim 8, 9 or 10, wherein the neural network (200) includes a plurality of MDT5s recorded over a number of flights of the aircraft (100).

12. The controller (120) of Claim 11, wherein to update the neural network (200), the controller (120) is further configured to replace an oldest recorded MDT5 of the plurality of MDT5s with the MDT5.

13. The controller (120) of Claim 11 or 12, wherein the neural network (200) is trained based on the plurality of MDT5s.

14. The controller (120) of Claim 11, 12 or 13, wherein an increase of the plurality MDT5s over time corresponds with an increase in the fuel coking factor.

15. A non-transitory machine readable medium containing instructions that, when executed by at least one processor, cause the at least one processor to carry out the method of any of Claims 1 to 7.
